(19) Europäisches Patentamt
European Patent Office
Office européen des brevets

(11) **EP 3 280 032 A1**

(12) **EUROPEAN PATENT APPLICATION**
published in accordance with Art. 153(4) EPC

(43) Date of publication:
**07.02.2018 Bulletin 2018/06**

(21) Application number: **16827762.2**

(22) Date of filing: **15.07.2016**

(51) Int Cl.:
*H02K 3/30* (2006.01)   *B32B 5/28* (2006.01)
*B32B 27/18* (2006.01)   *C08J 5/24* (2006.01)
*H01B 17/60* (2006.01)   *H02K 15/12* (2006.01)

(86) International application number:
**PCT/JP2016/071048**

(87) International publication number:
**WO 2017/014202 (26.01.2017 Gazette 2017/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.07.2015  JP 2015142943**

(71) Applicant: **Hitachi Chemical Co., Ltd.**
**Chiyoda-ku**
**Tokyo 100-6606 (JP)**

(72) Inventors:
• **YAMAMOTO, Takaya**
  **Tokyo 100-6606 (JP)**
• **MUROMACHI, Miyuki**
  **Tokyo 100-6606 (JP)**
• **TAKITA, Takao**
  **Tokyo 100-6606 (JP)**
• **FUKUSHIMA, Keiji**
  **Tokyo 100-6606 (JP)**
• **TAKEZAWA, Yoshitaka**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **COIL FOR ROTARY ELECTRIC MACHINE, METHOD FOR MANUFACTURING COIL FOR ROTARY ELECTRIC MACHINE, AND MICA TAPE**

(57)    A coil for a rotary electrical machine comprising a coil conductor and an insulation layer disposed around an outer periphery of the coil conductor, the insulation layer comprising a cured product of a mica tape, the mica tape comprising mica, a reinforcing member and a thermosetting resin, and having a reaction heat generated by a curing reaction of the thermosetting resin, as measured by differential scanning calorimetry (DSC), of -270 J/g or less.

FIG.1

**Description**

Technical Field

The invention relates to a coil for a rotary electrical machine, a method of producing a coil for rotary electrical machine, and a mica tape.

Background Art

Coils used for rotary electrical machines, such as electricity generators and electric motors (hereinafter, also simply referred to as a coil), generally have a coil conductor and an insulation layer that is disposed around the outer periphery of the coil conductor to insulate the same from the external environment. As a material for forming an insulation layer, a mica tape, which includes a thermosetting resin such as an epoxy resin and a reinforcing member such as a glass cloth, is widely used (see, for example, International Publication No. WO2015/053374).

A mica tape has a structure in which a resin in a semi-cured state, a reinforcing member and mica are integrated, and it is used to form an insulating layer and a conductor in an integrated manner by winding the same tape around the conductor and pressing the same.

[Summary of the Invention]

[Problems to be Solved by the Invention]

A mica tape needs to have favorable resin flowability, along with an electrical insulation property. By causing a moderate resin flowage from a mica tape wound around a conductor, tapes stick together tightly and formation of voids in an insulation layer is suppressed. As a result, lowering of a withstand voltage is suppressed. In addition, depending on the purpose of a coil for a rotary electrical machine, an insulation layer needs to have sufficient heat resistance.

In view of the above, the invention aims to provide a coil for a rotary electrical machine that has an insulation layer with favorable heat resistance and a favorable electrical insulation property, and a method of producing the same. The invention also aims to provide a mica tape that exhibits favorable heat resistance after curing and favorable resin flowability before curing.

[Means for Solving the Problem]

The means for solving the problem include the following embodiments.

<1> A coil for a rotary electrical machine comprising a coil conductor and an insulation layer disposed around an outer periphery of the coil conductor, the insulation layer comprising a cured product of a mica tape, the mica tape comprising mica, a reinforcing member and a thermosetting resin, and having a reaction heat generated by a curing reaction of the thermosetting resin, as measured by differential scanning calorimetry (DSC), of -270 J/g or less.

<2> The coil for a rotary electrical machine according to <1>, wherein the mica tape further comprises an inorganic filler.

<3> The coil for a rotary electrical machine according to <1> or <2>, wherein the thermosetting resin in the mica tape is an epoxy resin.

<4> The coil for a rotary electrical machine according to <3>, wherein the mica tape further comprises a curing accelerator.

<5> The coil for a rotary electrical machine according to any one of <1> to <4>, wherein the mica tape has a glass transition temperature (Tg), after curing, of 155°C or higher.

<6> A method of producing a coil for a rotary electrical machine according to any one of <1> to <5>, comprising a process of winding the mica tape around the outer periphery of the coil conductor, and a process of forming an insulation layer from the mica tape that is wound around the outer periphery of the coil conductor.

<7> A mica tape comprising mica, a reinforcing member and a thermosetting resin, and having a reaction heat generated by a curing reaction of the thermosetting resin, as measured by differential scanning calorimetry (DSC), of -270 J/g or less.

<8> The mica tape according to <7>, further comprising an inorganic filler.

<9> The mica tape according to <7> or <8>, wherein the thermosetting resin is an epoxy resin.

<10> The mica tape according to <9>, further comprising a curing accelerator.

<11> The mica tape according to any one of claim 7 to claim 10, having a glass transition temperature (Tg), after curing, of 155°C or higher.

[Effect of the Invention]

According to the invention, a coil for a rotary electrical machine that has an insulation layer with favorable heat resistance and a favorable electrical insulation property, and a method of producing the same are provided. Further, a mica tape that exhibits favorable heat resistance after curing, and favorable resin flowability before curing, is provided.

[Brief explanation of the Drawings]

Fig. 1 is a schematic view showing a section of a mica tape according to an embodiment of the invention.
Fig. 2 is a graph showing a correlation between a reaction heat of a resin and a glass transition temperature (Tg) of a cured product of a mica tape.

[Embodiments for implementing the Invention]

In the following, the embodiments for implementing the invention are explained. However, the invention is not limited to the embodiments. The elements of the embodiments (including steps) are not essential, unless otherwise stated. The numbers and the ranges thereof do not limit the invention as well.

In the specification, the "process" refers not only to a process that is independent from the other steps, but also to a step that cannot be clearly distinguished from the other steps, as long as the aim of the process is achieved.

In the specification, the numerical range represented by from A to B includes A and B as a maximum value and a minimum value, respectively.

In the specification, when there are more than one kind of substances corresponding to a component of a composition, the content of the component refers to a total content of the substances, unless otherwise stated.

In the specification, when a composition includes more than one kind of particles, the particle size of the particles refers to a particle size of a mixture of the particles in the component, unless otherwise stated.

In the specification, a "layer" may be formed over an entire region or may be formed over part of a region, upon observation of the region.

In the specification, a "laminate" refers to a set of layers, in which the layers may be bound to each other or may be detachable from each other.

<Coil for rotary electrical machine>

The coil for rotary electrical machine of an embodiment has a coil conductor and an insulation layer disposed around an outer periphery of the coil conductor, the insulation layer comprising a cured product of a mica tape, the mica tape comprising mica, a reinforcing member and a thermosetting resin, and having a reaction heat generated by a curing reaction of the thermosetting resin, as measured by differential scanning calorimetry (DSC), of -270 J/g or less.

The coil for rotary electrical machine of an embodiment has an insulation layer that exhibits favorable heat resistance and a favorable electrical insulation property.

The details and preferable embodiments of the mica tape used for forming the insulation layer of the coil are the same as that of the mica tape as described later. The material, shape, size and the like of the coil conductor used for the coil are not particularly limited, and may be selected according to the purpose of the coil and the like.

<Method of producing coil for rotary electrical machine>

The method of producing a coil for rotary electrical machine comprises a process of winding the mica tape around an outer periphery of the coil conductor and a process of forming an insulation layer from the mica tape that is wound around the outer periphery of the coil conductor.

The method of winding a mica tape around an outer periphery a coil conductor is not particularly limited, and may be performed by an ordinary method.

The method of forming an insulation layer from the mica tape that is wound around the coil conductor is not particularly limited. For example, an insulation layer may be formed by a method including winding a mica tape around an outer periphery of a coil conductor, heating the mica tape while pressing (heat pressing) in order to let a resin component to flow out of the mica tape and fill the gap between the tapes, and curing the resin component (prepreg mica tape); or by a method including winding a mica tape around an outer periphery a coil conductor and impregnating the mica tape with a resin component by a VIP method (Vacuum Pressure Impregnation), and curing the resin component (dry mica tape). From the viewpoint of exerting the effect of the invention, the former method is preferred.

<Mica tape>

The mica tape includes mica, a reinforcing member and a thermosetting resin, and has a reaction heat generated by a curing reaction of the thermosetting resin, as measured by differential scanning calorimetry (DSC), of -270 J/g or less.

The inventors have found that a mica tape that satisfies the requirement for a reaction heat of the resin (i.e., -270 J/g or less) exhibits a significantly high glass transition temperature (Tg, also referred to as the "Tg of a cured product of a mica tape") after curing the thermosetting resin in the mica tape, as compared with a case in which the requirement for a reaction heat is not satisfied.

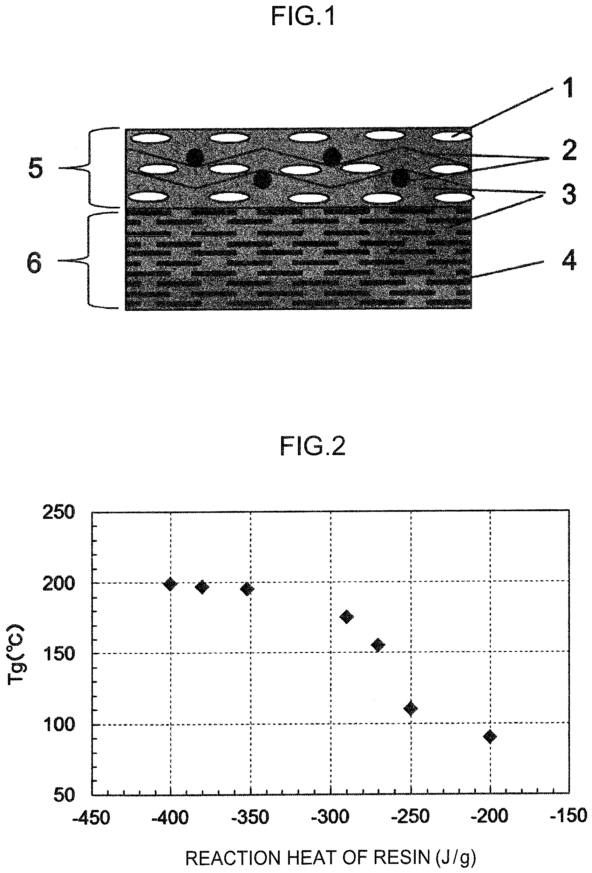

Fig. 2 is a graph showing a correlation between the reaction heat of the resin and the Tg of the cured product of the mica tape (cured mica tape). As shown in Fig. 2, the Tg of the cured mica tape tends to be higher as the absolute value of the reaction heat of the resin increases. Further, it is found that this tendency is more significant when the reaction heat of the resin is from -250 J/g to -300 J/g. In addition, from the comparison of a case with the reaction heat of the resin of -251 J/g and a case with the reaction heat of the resin of -270 J/g, it is found that the Tg of the cured mica tape rapidly increases from 111°C (-251 J/g) to 155 °C (-270 J/g).

A factor for this tendency, i.e., the Tg of the cured mica tape is higher as the absolute value of the reaction heat of the resin is greater, is considered to be, for example, that a thermosetting resin with a large absolute value of the reaction heat of the resin includes a molecule with a less degree of progression of polymerization and a relatively small molecule size, and this results in a high density of reaction sites upon curing and an active molecular motion to cause a reaction. However, there has been no report on a technical finding that the glass transition temperature significantly increases when the reaction heat of the resin is -270 J/g or less, as compared with a case in which the reaction heat of the resin is not -270 J/g or less.

In addition, the inventors have found that the resin flowability of the thermosetting resin in the mica tape satisfies the requirement of a reaction heat of the resin to be -270 J/g or less is significantly improved, as compared with a case when the requirement is not satisfied. When the thermosetting resin has favorable resin flowability, it may result in a tight adhesion of the tapes when the mica tape is wound around an outer periphery of a member to be insulated, thereby suppressing occurrence of voids within the tape and achieving a favorable dielectric strength voltage.

Generally, a thermosetting resin with a smaller degree of polymerization reaction before curing (i.e., with a greater absolute value of the reaction heat of the resin) tends to have a lower viscosity and exhibit favorable resin flowability. However, there has been no report on a technical finding that the resin flowability is significantly improved when the reaction heat of the resin is - 270 J/g or less, as compared with a case in which the reaction heat of the resin is not -270 J/g or less.

From the viewpoint of increasing the Tg of the cured mica tape, the reaction heat of the resin is preferably -280 J/g or less, more preferably -300 J/g or less, further preferably -350 J/g or less.

The Tg of the cured mica tape is preferably 155°C or higher, more preferably 170°C or higher, further preferably 180°C or higher. When the Tg of the cured mica tape is 155°C or higher, adequate heat resistance for practical use tends to be achieved.

In the embodiment, the reaction heat of the resin is a value as measured by DSC. Specifically, for example, the reaction heat of the resin is a value that is calculated from an area of an exothermic peak obtained by using a DSC measurement device (Perkin Elmer, Inc., DSC8000). The measurement is conducted with a sample of 10 mg prepared from a mica tape, under the conditions of nitrogen atmosphere, temperature increase rate of 10°C/min, and the measurement temperature range of from 30°C to 300°C. In a case of using the DSC measurement device as mentioned above, a reaction heat of the resin is obtained by calculating an area of an exothermic peak within a range of from a point at which the curve departs from the base line to a point at which the curve joins the base line, with an accompanying analysis software (PerkinElmer Japan Co., Ltd., Pyris Ver.11.1.1.0492).

In the embodiment, the Tg of the cured mica tape is a value obtained by measuring a dynamic viscoelasticity. Specifically, for example, the measurement is conducted with a measurement device (TA Instruments, RSA-G2 Solids Analyzer) at the tensile mode with the measurement conditions of a temperature increase rate of 2°C/min and a span distance of 20 mm.

(Mica)

The mica used in the embodiment is not particularly limited. Examples of the mica include uncalcined hard mica, calcined hard mica, uncalcined soft mica, calcined soft mica, synthetic mica and flake mica. In view of the price and availability, uncalcined hard mica is preferred. Only one kind of mica may be used alone, or two or more kinds of mica may be used in combination. Example of a combination of two or more kinds of mica include a combination of two or more kinds that are different in the type, a combination of two or more kinds that are the same in the type but different in the average particle size, and a combination of two or more kinds that are different in the type and the average particle size.

From the viewpoint of improving an electrical insulation property, the ratio of mica flakes having a size of 2.8 mm or more in mica included in the mica tape is preferably less than 45% by mass, more preferably 30% by mass or less, further preferably 20% by mass or less, as measured by using a JIS standard sieve.

From the viewpoint of ensuring a sufficient dielectric breakdown electric-field strength, the ratio of mica flakes having a size of 0.5 mm or more in mica included in the mica tape is preferably 40% by mass or more, more preferably 60% by mass or more, as measured with a JIS standard sieve.

The JIS standard sieve is in compliance with JIS-Z-8801-1:2006, which corresponds to ISO 3310-1:2000. When ISO 3310-1:2000 is applied, a sieve with square apertures is preferably used, as with the case of JIS-Z-8801-1:2006.

The ratio of mica flakes having a size of 2.8 mm or more and the ratio of mica flakes having a size of 0.5 mm or more as measured by using a JIS standard sieve may be confirmed by the following process, for example.

A mica layer is separated from a reinforcing layer by inserting a razor between the reinforcing layer (a reinforcing member) and the mica layer. Then, 1 g of the separated mica layer is dispersed in 100 g of methyl ethyl ketone, and it is shaken for 10 minutes and centrifuged for 5 minutes at a rate of 8000 rotations/min (rpm). Further, a supernatant is removed and 100 g of methyl ethyl ketone is added to a solid matter, and it is shaken for 10 minutes and centrifuged for 5 minutes at a rate of 8000 rotations/min (rpm). A supernatant is removed and 1 g of the remaining solid matter is added with 100 g of methyl ethyl ketone, dispersed with a mix rotor for 30 minutes, and shaken for 10 minutes. While continuing the shaking, the mica flakes are sieved with a JIS standard sieve (JIS-Z-8801-1:2006, ISO3310-1:2000, Tokyo Screen Co., Ltd., testing sieves) with an aperture size of 2.8 mm and with an aperture size of 0.5 mm, in this order.

As a result of the sieving, mica flakes that did not pass through the aperture of 2.8 mm (or 0.5 mm) are referred to as "mica flakes having a size of 2.8 mm (or 0.5 mm) or more", and the ratio of "mica flakes having a size of 2.8 mm (or 0.5 mm) or more" in the total mica flakes (% by mass) is referred to as the "ratio of mica flakes having a size of 2.8 mm (or 0.5 mm) or more as measured with a JIS standard sieve".

(Reinforcing member)

The reinforcing member is not particularly limited. Examples of the reinforcing member include a cloth formed of fibers of an inorganic material or an organic material. Examples of the inorganic material include a glass. Examples of the organic material include polymers such as aramid, polyimide and polyester. The inorganic material or the organic material may be used alone or in combination of two or more kinds. When a polymer is used as part of the fibers as an inorganic material, it may be used as either the warp or the woof, or as both of them. It is possible to use a glass cloth using glass fibers and an organic polymer film in combination. The thickness of the reinforcing member is not particularly limited, and may be selected from 10 μm to 100 μm.

(Thermosetting resin)

The thermosetting resin is not particularly limited. Examples of the thermosetting resin include epoxy resins such as bisphenol A epoxy resin, bisphenol F epoxy resin, phenol novolac epoxy resin and cresol novolac epoxy resin, and acrylic resins. From the viewpoint of heat resistance after curing and resin flowability before curing, an epoxy resin is preferred. The epoxy resin may be used alone or in combination of two or more kinds.

(Other components)

The mica tape may include components other than the components as described above.

Examples of the other components include an inorganic filler, a curing agent, a curing accelerator and an organic solvent. From the viewpoint of improving heat conductivity, the mica tape preferably includes an inorganic filler. From the viewpoint of a forming property (curing property), the mica tape preferably includes an epoxy resin as a thermosetting resin and a curing accelerator. In the specification, a curing accelerator refers to a compound that accelerates the curing of a thermosetting resin by a catalytic activity.

When the mica tape includes an inorganic filler, the type thereof is not particularly limited. Examples of the inorganic filler include boron nitride, alumina, silica, aluminum nitride, magnesium oxide, silicon oxide and aluminum hydroxide. Only one kind of the inorganic filler may be used alone or two or more kinds may be used in combination. Example of a combination of two or more kinds of inorganic filler include a combination of two or more kinds that are different in the average particle size, a combination of two or more kinds that are the same in the average particle size but different in the type, and a combination of two or more kinds that are different in the average particle size and the type.

From the viewpoint of improving heat conductivity, the inorganic filler is preferably at least one selected from boron nitride and alumina, more preferably boron nitride. Examples of the boron nitride include hexagonal boron nitride (h-BN), cubic boron nitride (c-BN) and wurtzite boron nitride. Among these, hexagonal boron nitride (h-BN) is preferred. The boron nitride may be in the form of scale-like primary particles, or may be secondary particles formed by aggregation of primary particles.

The average particle size of the boron nitride is preferably from 1 μm to 40 μm, more preferably from 5 μm to 20 μm, further preferably from 5 μm to 10 μm. When the average particle size of the boron nitride is 1 μm or more, heat conductivity and a withstand voltage tend to be further improved. When the average particle size of the boron nitride is 40 μm or less, excessive increase in anisotropy in heat conductivity due to the shape of particles may be suppressed.

The average particle size of the inorganic filler may be measured by using a laser diffraction/scattering particle size distribution measurement device (Microtrac MT3000 II, Nikkiso Co., Ltd.) Specifically, the measurement is conducted by preparing a dispersion by adding an inorganic filler in purified water and dispersing the same with an ultrasonic disperser, and measuring a voltage-based particle size distribution of the dispersion. The particle size at a point where the accumulation from the smaller side in a distribution curve is 50% is referred to as an average particle size (D50).

When the mica tape include an inorganic filler, the content of an inorganic filler is not particularly limited. From the viewpoint of heat conductivity and a filling property, the content of the inorganic filler is preferably from 15% by volume to 40% by volume, more preferably from 25% by volume to 35% by volume, with respect to a total amount of the reinforcing member included in the mica tape and the non-volatile components except mica.

When the mica tape includes a curing agent, the kind thereof is not particularly limited. Examples of the curing agent include amine curing agents such as dicyandiamide and aromatic diamines, and phenol resin curing agents such as a phenol novolac resin and a cresol novolac resin. Only one kind of a curing agent may be used alone, or two or more kinds may be used in combination.

When the mica tape includes a curing accelerator, the kind thereof is not particularly limited. Examples of the curing accelerator include imidazole catalysts such as 2-methyl imidazole and 2-methyl-4-ethyl imidazole, tertiary amine compounds such as trimethyl amine, amine chelates of Lewis acid such as boron trifluoride monoethyl amine, and organic phosphorous compounds such as organic phosphine compounds. Only one kind of a curing accelerator may be used alone, or two or more kinds may be used in combination.

When the mica tape includes an organic solvent, the kind thereof is not particularly limited. Examples of the organic solvent include methyl ethyl ketone (MEK), methanol, ethanol, acetone and cyclohexanone. Only one kind of an organic solvent may be used alone, or two or more kinds may be used in combination.

In an embodiment, the resin composition includes from 20% by mass to 40% by mass of boron nitride, from 10% by mass to 40% by mass of a thermosetting resin, from 1% by mass to 10% by mass of a curing accelerator, and from 10% by mass to 50% by mass of an organic solvent.

(Structural example of mica tape)

In the following, an example of the structure of the mica tape is explained by referring to a drawing. In the drawing, the size of the members is described on a conceptual basis, and the relative relationship among the actual members is not restricted thereto.

In Fig. 1, the figure 1 indicates the inorganic filler, the figure 2 indicates the reinforcing member, the figure 3 indicates a resin composition that includes the thermosetting resin, and the figure 4 indicates the mica. Resin composition 3 that exists at a portion including a reinforcing member (reinforcing member-including layer 5) and resin composition 3 that exists at a portion including mica (mica-including layer 6) may be the same kind or different from each other. From the viewpoint of manufacturing efficiency, resin composition 3 that exists in reinforcing member-including layer 5 and resin composition 3 that exists in mica-including layer 6 are preferably the same kind. When the mica tape includes inorganic filler 1, it is preferred that inorganic filler 1 is included substantially only in reinforcing member-including layer 5, but not in mica-including layer 6.

(Method of producing mica tape)

A method of producing the mica tape is not particularly limited. For example, the mica tape may be produced by a method including a process of preparing a laminate by positioning a reinforcing member, a resin composition including a thermosetting resin and mica, in this order; and a process of drying the laminate.

In the method as mentioned above, a method for conducting the process of preparing a laminate is not particularly limited. For example, a laminate may be prepared by applying a resin composition, including a thermosetting resin, on one side of a reinforcing member with a roll coater or the like, and disposing mica that are processed into a desired shape, such as a mica paper, on the resin composition. In this method, the resin composition that has been applied onto the reinforcing member may be dried in order to remove a volatile component, prior to disposing the mica thereon, or the mica may be placed on the resin composition without drying the same.

A method for conducting the process for drying the laminate is not particularly limited. For example, the drying may be performed by using an explosion-proof drier. The drying is preferably performed at 70°C or higher, more preferably at 80°C or higher, further preferably at 90°C or higher. The drying is preferably performed at 140°C or less, more preferably at 130°C or less, further preferably at 120°C or less. The temperature during the drying may be maintained constant or may be changed. The time for the drying is not particularly limited, and may be, for example, from 1 minute to 60 minutes.

The mica tape may be used, for example, for forming an insulation layer that is provided around an outer periphery of a member to be insulated, such as a coil conductor used in a rotary electrical machine.

A method of forming an insulation layer using the mica tape is not particularly limited, and a conventional method may be applied. Examples of the method include a method including winding a mica tape around an outer periphery of a member to be insulated, heating the mica tape while pressing (heat press) in order to let a resin component to flow out of the mica tape and fill the gap between the tapes, and curing the resin component (in a case of a prepreg mica tape); or a method including winding a mica tape around an outer periphery of a member to be insulated and impregnating the mica tape with a resin component by a VIP method (Vacuum Pressure Impregnation), and curing the resin component (in a case of dry mica tape). From the viewpoint of sufficiently exerting the effect of the invention, the former method is preferred.

[Examples]

In the following, the embodiments as described above are explained by referring to the examples. However, the embodiments are not limited thereto.

<Example 1>

(Preparation of resin composition)

A resin composition was prepared by mixing 36.7% by mass of an epoxy novolac resin as a thermosetting resin (The Dow Chemical Company, trade name: D.E.N. 438, "D.E.N." is a registered trade mark, the same applies to the following Examples and Comparative Examples), 1.1% by mass of boron trifluoride monoethyl amine as a curing accelerator (Wako Pure Chemical Industries, Ltd., the same applies to the following Examples and Comparative Examples) and 31.1% by mass of methyl ethyl ketone (MEK) as an organic solvent, and adding 31.1% by mass of boron nitride (average particle diameter: 5 $\mu$m, Denka Company Limited, SP-3, the same applies to the following Examples and Comparative Examples) and further mixing.

The content of boron nitride in the total non-volatile components in the resin composition was 31% by volume.

(Preparation of mica tape)

The resin composition was applied onto one side of a glass cloth as a reinforcing member (Nitto Boseki Co., Ltd., trade name: WEA03G103) with a roll coater. Then, a mica paper with a mica amount per area of 180 g/m$^2$ was placed on the side with the resin composition, such that the mica paper and the reinforcing member are bonded with the resin composition, thereby preparing a laminate.

The laminate was subjected to hot-air drying at 90°C for 30 minutes, and cut into strips of 30 mm in width, thereby obtaining a mica tape.

(Preparation of cured mica tape)

The mica tape was subjected to a heat shaping process at 10MPa and 110°C for 10 minutes, and further at 10MPa and 170°C for 60 minutes, thereby obtaining a cured product of the mica tape (cured mica tape).

(Evaluation)

The mica tape and the cured mica tape were evaluated by the following process.

(Resin flowability)

Three test samples were prepared by cutting the mica tape into a size of 30 mm in width and 30 mm in length, respectively. The test samples were stacked, and heated at 110°C for 5 minutes with a metal block of 200 g placed thereon. After the heating, the resin portion that flowed out from the base (corresponding to the reinforcing member and the mica paper) was trimmed and the amount of resin flow (% by mass) was calculated from the total mass before the heating and the mass of the resin flow portion, after the heating by the following formula.

$$\text{Resin flow amount (\% by mass)} = \text{mass of trimmed resin portion} / \text{total mass of test pieces}$$

before heating x 100

(Reaction heat of resin)

The reaction heat of the resin was measured by the following method.

The mica tape was cut into pieces with a shape of a circle of 6 mm in diameter. Five pieces were stacked such that a total mass was 10 mg, in an aluminum sample pan (PerkinElmer Japan Co., Ltd.)

Then, the reaction heat was measured by using a DSC measurement device (PerkinElmer Japan Co., Ltd., DSC8000). The measurement was conducted under a nitrogen atmosphere, temperature increase rate of 10°C/min, and a measurement temperature range of from 30°C to 300°C. The result was processed with an accompanying analysis software (PerkinElmer Japan Co., Ltd., Pyris Ver.11.1.1.0492) by calculating an area of an exothermic peak within a range of from a point at which the curve departs from the base line to a point at which the curve joins the base line. The result is shown in Table 1.

(Glass transition temperature)

The glass transition temperature (Tg) of the cured mica tape was measured by using a dynamic viscoelasticity measurement device (TA Instruments, RSA-G2 Solids Analyzer). The measurement was conducted at a tensile mode, under the measurement conditions of a temperature increase rate of 2°C/min and a span distance of 20 mm. The result is shown in Table 1.

(Heat conductivity)

The heat conductivity of the cured mica tape was measured by using a heat conductivity measurement device (Eko Instruments, HC-110). The result is shown in Table 1.

<Example 2>

(Preparation of resin composition)

A resin composition was prepared by mixing 36.0% by mass of an epoxy novolac resin as a thermosetting resin, 1.1% by mass of boron trifluoride monoethyl amine as a curing accelerator and 40.2% by mass of methyl ethyl ketone (MEK) as an organic solvent, and then adding 22.7% by mass of boron nitride and further mixing.

The content of boron nitride in the total non-volatile components in the resin composition was 25% by volume.

(Preparation of mica tape and cured mica tape)

A mica tape and a cured mica tape were prepared in the same manner as Example 1, except that the resin composition as prepared above was used.

(Evaluation)

The resin flow amount, the content of boron nitride in the flow resin, the reaction heat of the resin, the glass transition temperature of the cured mica tape, and the heat conductivity of the cured mica tape were measured in the same manner as Example 1. The results are shown in Table 1.

<Example 3>

(Preparation of resin composition)

A resin composition was prepared by mixing 36.0% by mass of an epoxy novolac resin as a thermosetting resin, 1.1% by mass of boron trifluoride monoethyl amine as a curing accelerator and 40.2% by mass of methyl ethyl ketone (MEK) as an organic solvent, and then adding 22.7% by mass of boron nitride and further mixing.

The content of boron nitride in the total non-volatile components in the resin composition was 25% by volume.

(Preparation of mica tape and cured mica tape)

A mica tape and a cured mica tape were prepared in the same manner as Example 1, except that the resin composition as prepared above was used and that the hot-air drying was conducted at 100°C for 30 minutes.

(Evaluation)

The resin flow amount, the content of boron nitride in the flow resin, the reaction heat of the resin, the glass transition temperature of the cured mica tape, and the heat conductivity of the cured mica tape were measured in the same manner as Example 1. The results are shown in Table 1.

<Example 4>

(Preparation of resin composition)

A resin composition was prepared by mixing 36.0% by mass of an epoxy novolac resin as a thermosetting resin, 1.1% by mass of boron trifluoride monoethyl amine as a curing accelerator and 40.2% by mass of methyl ethyl ketone (MEK) as an organic solvent, and then adding 22.7% by mass of boron nitride and further mixing.
The content of boron nitride in the total non-volatile components in the resin composition was 25% by volume.

(Preparation of mica tape and cured mica tape)

The resin composition was applied onto a glass cloth and a mica tape was placed thereon, in the same manner as Example 1, thereby preparing a laminate. The laminate was wrapped with a polyethylene film and kept at 60°C for 24 hours. Then, the polyethylene film was removed and hot-air drying was conducted in the same manner as Example 1. The laminate was cut into strips of 30 mm in width to obtain a mica tape. A cured mica tape was prepared from the mica tape in the same manner as Example 1.

(Evaluation)

The resin flow amount, the content of boron nitride in the flow resin, the reaction heat of the resin, the glass transition temperature of the cured mica tape, and the heat conductivity of the cured mica tape were measured in the same manner as Example 1. The results are shown in Table 1.

<Example 5>

(Preparation of resin composition)

A resin composition was prepared by mixing 36.0% by mass of an epoxy novolac resin as a thermosetting resin, 1.1% by mass of boron trifluoride monoethyl amine as a curing accelerator and 40.2% by mass of methyl ethyl ketone (MEK) as an organic solvent, and then adding 22.7% by mass of boron nitride and further mixing.
The content of boron nitride in the total non-volatile components in the resin composition was 25% by volume.

(Preparation of mica tape and cured mica tape)

The resin composition was applied onto a glass cloth and a mica tape was placed thereon, in the same manner as Example 1, thereby preparing a laminate. The laminate was wrapped with a polyethylene film and kept at 60°C for 48 hours. Then, the polyethylene film was removed and hot-air drying was conducted in the same manner as Example 1. The laminate was cut into strips of 30 mm in width to obtain a mica tape. A cured mica tape was prepared from the mica tape in the same manner as Example 1.

(Evaluation)

The resin flow amount, the content of boron nitride in the flow resin, the reaction heat of the resin, the glass transition temperature of the cured mica tape, and the heat conductivity of the cured mica tape were measured in the same manner as Example 1. The results are shown in Table 1.

<Comparative Example 1>

(Preparation of resin composition)

A resin composition was prepared by mixing 36.0% by mass of an epoxy novolac resin as a thermosetting resin, 1.1% by mass of boron trifluoride monoethyl amine as a curing accelerator and 40.2% by mass of methyl ethyl ketone (MEK) as an organic solvent, and then adding 22.7% by mass of boron nitride and further mixing.
The content of boron nitride in the total non-volatile components in the resin composition was 25% by volume.

(Preparation of mica tape and cured mica tape)

The resin composition was applied onto a glass cloth and a mica tape was placed thereon, in the same manner as Example 1, thereby preparing a laminate. The laminate was wrapped with a polyethylene film and kept at 60°C for 72 hours. Then, the polyethylene film was removed and hot-air drying was conducted in the same manner as Example 1. The laminate was cut into strips of 30 mm in width to obtain a mica tape. A cured mica tape was prepared from the mica tape in the same manner as Example 1.

(Evaluation)

The resin flow amount, the content of boron nitride in the flow resin, the reaction heat of the resin, the glass transition temperature of the cured mica tape, and the heat conductivity of the cured mica tape were measured in the same manner as Example 1. The results are shown in Table 1.

<Comparative Example 2>

(Preparation of resin composition)

A resin composition was prepared by mixing 36.0% by mass of an epoxy novolac resin as a thermosetting resin, 1.1% by mass of boron trifluoride monoethyl amine as a curing accelerator and 40.2% by mass of methyl ethyl ketone (MEK) as an organic solvent, and then adding 22.7% by mass of boron nitride and further mixing.
The content of boron nitride in the total non-volatile components in the resin composition was 25% by volume.

(Preparation of mica tape and cured mica tape)

The resin composition was applied onto a glass cloth and a mica tape was placed thereon, in the same manner as Example 1, thereby preparing a laminate. The laminate was wrapped with a polyethylene film and kept at 60°C for 96 hours. Then, the polyethylene film was removed and hot-air drying was conducted in the same manner as Example 1. The laminate was cut into strips of 30 mm in width to obtain a mica tape. A cured mica tape was prepared from the mica tape in the same manner as Example 1.

(Evaluation)

The resin flow amount, the content of boron nitride in the flow resin, the reaction heat of the resin, the glass transition temperature of the cured mica tape, and the heat conductivity of the cured mica tape were measured in the same manner as Example 1. The results are shown in Table 1.

Table 1

| | | Example 1 | Example 2 | Example 3 | Example 4 | Example 5 | Comp. Example 1 | Comp. Example 2 |
|---|---|---|---|---|---|---|---|---|
| Boron Nitride Content | vol% | 31 | 25 | 25 | 25 | 25 | 25 | 25 |
| Temperature Conditions | °C | - | - | - | 60 | 60 | 60 | 60 |
| | hours | - | - | - | 24 | 48 | 72 | 96 |

(continued)

|  | | Example 1 | Example 2 | Example 3 | Example 4 | Example 5 | Comp. Example 1 | Comp. Example 2 |
|---|---|---|---|---|---|---|---|---|
| Drying Conditions | °C | 90 | 90 | 100 | 90 | 90 | 90 | 90 |
| | minutes | 30 | 30 | 30 | 30 | 30 | 30 | 30 |
| Amount of Resin Flow | mass% | 5.3 | 6.0 | 6.8 | 3.3 | 2.1 | 0.9 | 0.6 |
| Reaction Heat | J/g | -400 | -382 | -352 | -289 | -270 | -251 | -200 |
| Tg | °C | 199 | 195 | 194 | 175 | 155 | 111 | 91 |
| Heat Conductivity | W/(m·k) | 0.68 | 0.66 | 0.66 | 0.67 | 0.65 | 0.63 | 0.61 |

As shown in Table 1, the mica tapes prepared in Examples 1 to 5 exhibited a large amount of resin flow and a high glass transition temperature after curing.

The mica tape of Comparative Example 1, which was kept at 60°C for 72 hours before the hot-air drying, had a reaction heat of the resin of -251 J/g. As a result, the amount of resin flow was significantly small as compared with the mica tapes of the Examples, and the Tg after curing was too low for practical use.

The mica tape of Comparative Example 2, which was kept at 60°C for 96 hours before the hot-air drying, had a reaction heat of the resin of -200 J/g. As a result, the amount of resin flow was significantly small as compared with the mica tapes of the Examples, and the Tg after curing was too low for practical use.

Explanation of Symbols

1: inorganic filler, 2: reinforcing agent, 3: resin composition, 4: mica, 5: reinforcing member-including layer, 6: mica-including layer

**Claims**

1. A coil for a rotary electrical machine comprising a coil conductor and an insulation layer disposed around an outer periphery of the coil conductor, the insulation layer comprising a cured product of a mica tape, the mica tape comprising mica, a reinforcing member and a thermosetting resin, and having a reaction heat generated by a curing reaction of the thermosetting resin, as measured by differential scanning calorimetry (DSC), of -270 J/g or less.

2. The coil for a rotary electrical machine according to claim 1, wherein the mica tape further comprises an inorganic filler.

3. The coil for a rotary electrical machine according to claim 1 or claim 2, wherein the thermosetting resin in the mica tape is an epoxy resin.

4. The coil for a rotary electrical machine according to claim 3, wherein the mica tape further comprises a curing accelerator.

5. The coil for a rotary electrical machine according to any one of claim 1 to claim 4,
wherein the mica tape has a glass transition temperature (Tg), after curing, of 155°C or higher.

6. A method of producing a coil for a rotary electrical machine according to any one of claim 1 to claim 5, comprising a process of winding the mica tape around the outer periphery of the coil conductor, and a process of forming an insulation layer from the mica tape that is wound around the outer periphery of the coil conductor.

7. A mica tape comprising mica, a reinforcing member and a thermosetting resin, and having a reaction heat generated by a curing reaction of the thermosetting resin, as measured by differential scanning calorimetry (DSC), of -270 J/g or less.

8. The mica tape according to claim 7, further comprising an inorganic filler.

9. The mica tape according to claim 7 or claim 8, wherein the thermosetting resin is an epoxy resin.

10. The mica tape according to claim 9, further comprising a curing accelerator.

11. The mica tape according to any one of claim 7 to claim 10, having a glass transition temperature (Tg), after curing, of 155°C or higher.

# FIG.1

# FIG.2

## EP 3 280 032 A1

| | | INTERNATIONAL SEARCH REPORT | International application No. |
|---|---|---|---|
| | | | PCT/JP2016/071048 |

**A. CLASSIFICATION OF SUBJECT MATTER**
*H02K3/30*(2006.01)i, *B32B5/28*(2006.01)i, *B32B27/18*(2006.01)i, *C08J5/24* (2006.01)i, *H01B17/60*(2006.01)i, *H02K15/12*(2006.01)i

According to International Patent Classification (IPC) or to both national classification and IPC

**B. FIELDS SEARCHED**

Minimum documentation searched (classification system followed by classification symbols)
H02K3/30, B32B5/28, B32B27/18, C08J5/24, H01B17/60, H02K15/12

Documentation searched other than minimum documentation to the extent that such documents are included in the fields searched
Jitsuyo Shinan Koho          1922-1996    Jitsuyo Shinan Toroku Koho    1996-2016
Kokai Jitsuyo Shinan Koho    1971-2016    Toroku Jitsuyo Shinan Koho    1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2015/053374 A1 (Hitachi Chemical Co., Ltd.), 16 April 2015 (16.04.2015), paragraphs [0051], [0054] to [0057]; fig. 1 to 4 & CN 105637599 A | 1-11 |
| Y | JP 10-014183 A (Toshiba Corp.), 16 January 1998 (16.01.1998), paragraph [0029] (Family: none) | 1-11 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 August 2016 (01.08.16) | 09 August 2016 (09.08.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015053374 A